(19) Europäisches Patentamt
European Patent Office
Office européen des brevets

(11) Numéro de publication : **0 015 856**
**B1**

# (12) FASCICULE DE BREVET EUROPÉEN

(45) Date de publication du fascicule du brevet : **24.11.82**

(51) Int. Cl.³ : **C 08 G 63/64**, C 08 G 63/68

(21) Numéro de dépôt : **80420021.0**

(22) Date de dépôt : **15.02.80**

(54) **Copolyesters aromatiques thermotropes et leurs procédés de préparation.**

(30) Priorité : **02.03.79 FR 7905920**

(43) Date de publication de la demande : **17.09.80 (Bulletin 80/19)**

(45) Mention de la délivrance du brevet : **24.11.82 Bulletin 82/47**

(84) Etats contractants désignés : **AT BE CH DE FR GB IT LU NL SE**

(56) Documents cités : **FR A 1 331 342**

(73) Titulaire : **RHONE-POULENC SPECIALITES CHIMIQUES**
**"Les miroirs" 18, Avenue d'Alsace**
**F-92400 Courbevoie (FR)**

(72) Inventeur : **Fayolle, Bernard**
**8, rue Fayolle**
**69130 Ecully (FR)**

(74) Mandataire : **Trolliet, Maurice et al.**
**RHONE-POULENC RECHERCHES Centre de Recherches de Saint-Fons Service Brevets B.P. 62**
**F-69190 Saint-Fons (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

EP 0 015 856 B1

Copolyesters aromatiques thermotropes et leurs procédés de préparation

La présente invention concerne des copolyesters aromatiques thermotropes de masse moléculaire élevée. Elle concerne également un procédé pour l'obtention desdits copolyesters.

Il est connu selon la demande française n° 2.270.282, publiée le 5 décembre 1975, de préparer des polyesters aromatiques thermotropes à partir d'un ou plusieurs diphénols et d'un ou plusieurs diacides carboxyliques aromatiques et/ou cycloaliphatiques. Pour des raisons d'ordre économique touchant au prix élevé des matières premières, on a cherché à remplacer certains de ces diacides, onéreux, par des composés du type carbonate qui sont moins coûteux et facilement accessibles.

Il est connu selon la demande française n° 2.340.963, publiée le 9 septembre 1977, de préparer des polyesters carbonates thermotropes comportant des motifs issus d'acides parahydroxybenzoïques, de diphénols non substitués, de carbonates de diaryle et éventuellement d'acides dicarboxyliques aromatiques. Mais on note que la proportion des motifs carbonates est limitée (au-delà de 50 % en mole par rapport à l'ensemble des motifs issus des produits acides et des carbonates, les propriétés mécaniques des polymères obtenus deviennent médiocres) et que la préparation des copolyesters nécessite par voie de conséquence l'utilisation d'une forte proportion de motifs issus d'acides parahydroxybenzoïques ; en fin de compte il apparaît donc que ces polyesters carbonates demeurent assez onéreux.

Il a maintenant été trouvé qu'il est possible d'obtenir des polyesters carbonates pouvant comporter une forte proportion d'unités carbonates à partir de produits facilement accessibles et peu onéreux, lesdits polyesters carbonates présentant un ensemble de caractéristiques particulièrement intéressantes : ils sont capables de former des masses fondues anisotropes ; ils présentent de bonnes propriétés mécaniques malgré la forte proportion d'unités carbonates ; et de plus ils sont faciles à mettre en forme à la fusion ce qui constitue un autre effet surprenant, car les polyesters carbonates possèdent en général une viscosité à l'état fondu élevée et sont donc, de ce fait, difficiles à mettre en forme.

Plus précisément, la présente invention concerne des polyesters carbonates thermotropes conformables de masse moléculaire élevée, caractérisés par le fait qu'ils possèdent une viscosité inhérente supérieure à 0,3 $dlg^{-1}$ (mesurée sur une solution à 0,5 g de polymère dans 100 $cm^3$ d'un mélange : parachlorophénol/dichloro-1,2 éthane à 50/50 en volume), une température d'écoulement supérieure ou égale à 150 °C et inférieure à 330 °C, et qu'ils sont constitués d'unités de formules :

(I) $-(-O-R-O-)-_a$, $-(-O-R_1-O-)-_b$

(II) $-\overset{\displaystyle O}{\overset{\|}{C}}-$

(III) $-CO-R_2-CO$

dans lesquelles :

— les radicaux R, identiques, représentent chacun un radical paraphénylène monosubstitué par un groupe méthyle, éthyle ou un atome de chlore ou de brome ;

— les radicaux $R_1$ représentent chacun un radical paraphénylène non substitué ;

— avec $0,3 \leq a \leq 1$ ; $0 \leq b \leq 0,7$ ; et $a + b = 1$ ;

— les radicaux $R_2$, qui peuvent être identiques ou différents, représentent chacun un radical choisi parmi les groupes paraphénylène, cyclohexylène-1,4, biphénylène-4,4', naphtylène-2,6, éthylènedioxy-4,4' diphénylène-1,1', butylènedioxy-4,4' diphénylène-1,1', hexylènedioxy-4,4' diphénylène-1,1' ; la quantité des unités (II) dans le mélange (II) + (III) étant comprise entre 30 et 90 % en mole ; et le rapport molaire des unités (I) par rapport à la somme des unités (II) + (III) étant compris entre 0,95 et 1,05.

Les unités de formule $-O-R-O-$ sont issues d'hydroquinone substituée. Comme exemple d'hydroquinone substituée, on peut citer la méthyl-, éthyl-, chloro- ou bromohydroquinone, et de préférence la méthyl-hydroquinone.

Les unités de formule $-O-R_1-O-$ proviennent de l'hydroquinone simple.

De préférence a et b, répondent aux relations : $0,5 \leq a \leq 1$ et $0 \leq b \leq 0,5$, et le rapport molaire des unités (I) par rapport à la somme des unités (II) + (III) est égal à 1.

De plus, lorsque la teneur en unités hydroquinone simple est maximale (cas où b est proche de 0,7), il est préférable que la proportion des unités (III) par rapport à la somme des unités (II) + (III) ne soit pas trop forte. En général, dans ce cas elle ne devra pas être supérieure à 50 % ou 60 % en mole.

Les unités de formule $-\overset{\displaystyle O}{\overset{\|}{C}}-$ proviennent de phosgène ou d'un carbonate de diaryle de formule :

$R_3-O-\overset{\displaystyle O}{\overset{\|}{C}}-O-R_4$, dans laquelle $R_3$ et $R_4$ représentent des groupes hydrocarbonés aromatiques

monovalents possédant 6 à 12 atomes de carbone tel que le carbonate de ditolyle, de phényle et tolyle, de dinaphtyle et de préférence le carbonate de diphényle.

Les unités —CO—$R_2$—CO— sont issues d'un dichlorure ou d'un diester de diaryle dérivé d'un acide dicarboxylique aromatique ou cycloaliphatique, de formules générales :

Cl—CO—$R_2$—CO—Cl ou $R_5$—OOC—$R_2$—COO—$R_6$, dans lesquelles $R_2$ représente un radical divalent tel que ceux définis ci-avant et $R_5$ et $R_6$ représentent des groupes hydrocarbonés identiques à $R_3$ et $R_4$.

Parmi les dichlorures ou les diesters de diaryle utilisables, on citera ceux dérivés des acides : téréphtalique, cyclohexanedicarboxylique-1,4, biphényldicarboxylique-4,4', naphtalènedicarboxylique-2,6, éthylènedioxy-4,4' dibenzènedicarboxylique-1,1', butylènedioxy-4,4' dibenzène dicarboxylique-1,1', hexylènedioxy-4,4' dibenzènedicarboxylique-1,1'. S'agissant des diesters, on utilise de préférence les diesters de diphényle.

Il doit être entendu que les unités (III) peuvent être issues encore d'un mélange de deux ou de plus de deux dichlorures ou diesters de diaryle appartenant au groupe de composés visés ci-avant.

Les copolyesters selon la présente invention possèdent une masse moléculaire élevée et une viscosité inhérente supérieure à 0,3 $dlg^{-1}$ (mesurée dans le mélange solvant p-chlorophénol/dichloro-1,2 éthane 50/50 sur une solution de concentration 0,5 g/100 $cm^3$ et à 25 °C) ; plus généralement ils possèdent une viscosité inhérente supérieure à 0,5 $dlg^{-1}$ ou même parfois supérieure à 1 $dlg^{-1}$ dans ce même mélange solvant.

Ils possèdent une température d'écoulement comprise entre 150 °C et 330 °C, plus généralement comprise entre 190 °C et 280 °C.

On entend par température d'écoulement la température à laquelle les bords d'un échantillon sous forme de copeau de polymère ou de fibre coupée commencent à s'arrondir. Cette température est déterminée par observation visuelle de l'échantillon sur une lamelle couvre-objet placée entre des polariseurs croisés (90 °C), pour une vitesse de montée en température appropriée, généralement de l'ordre de 10 à 20 °C/minute, sur un microscope équipé d'une platine chauffante, connu dans le commerce sous la marque « Thermopan » et fabriqué par REICHERT.

Les copolyesters selon la présente invention présentent la caractéristique importante d'être thermotropes, c'est-à-dire qu'ils sont capables de former des masses fondues anisotropes qui sont faciles à conformer par filage, filmage ou moulage ; la thermotropie est facile à mettre en évidence lorsqu'on observe le polymère à l'état fondu dans des systèmes optiques équipés de polariseurs croisés : il se produit une transmission de la lumière polarisée et création d'une forte biréfringence alors que la transmission de la lumière et la biréfringence sont nulles pour les produits isotropes observés en lumière polarisée. La mise en évidence de l'anisotropie des polyesters selon la présente invention a été effectuée par la méthode thermo-optique TOT décrite dans la demande française n° 2.270.282, publiée le 5 décembre 1975.

De ce fait, les masses fondues à l'état anisotrope possèdent une orientation propre et un degré relativement élevé d'organisation qui se retrouvent sur les articles conformés tels que les fils, films et objets moulés leur conférant (déjà à l'état brut) des propriétés améliorées telles que module, ténacité, qu'on n'observe pas habituellement sur les produits bruts isotropes.

Les polycarbonates connus jusque-là étaient souvent cités pour leur excellente tenue thermique : par contre, leur mise en forme posait des problèmes à cause de leur viscosité fondue élevée et de leur température élevée de transformation.

L'utilisation des polyesters carbonates anisotropes à la fusion selon la présente invention permet de concilier la bonne tenue thermique et la facilité de mise en forme grâce aux propriétés rhéologiques tout à fait exceptionnelles des polymères thermotropes (faible viscosité apparente dans certaines gammes de gradients de vitesse).

Par ailleurs, la mise en forme de tels polyesters carbonates dans la plage de températures où ils sont thermotropes permet l'obtention de fils et films ayant de bonnes propriétés mécaniques immédiatement après filage et filmage et d'objets moulés ayant de très bonnes caractéristiques mécaniques en flexion et en traction, ces propriétés augmentant quand on diminue l'épaisseur de l'objet moulé.

Toutefois, avant l'opération de mise en forme, les copolyesters carbonates selon l'invention sont de préférence séchés.

Il est possible d'augmenter encore les propriétés mécaniques des articles minces par traitement thermique à température élevée, inférieure à la température d'écoulement du polymère.

Les polyesters carbonates selon la présente invention peuvent être obtenus par différents procédés connus, par exemple en faisant réagir un dichlorure d'acide ou un mélange de dichlorures d'acides, le phosgène et un diphénol ou un mélange de diphénols en solution ou par polycondensation interfaciale selon la méthode décrite dans « Encyclopedia of Polymer Science and Technology » (1969, volume 10, page 726).

Mais de préférence, ils sont obtenus par réaction d'interéchange et polycondensation à partir d'un carbonate de diaryle (par exemple, de ditolyle, de phényle et tolyle, de dinaphthyle et de préférence de diphényle), d'un diester de diaryle ou d'un mélange de diesters de diaryle entre eux (par exemple de ditolyle, de phényle et tolyle, de dinaphthyle et de préférence de diphényle) et d'hydroquinone substituée seule ou en mélange avec de l'hydroquinone simple.

Dans l'un ou l'autre de ces procédés, les réactifs sont utilisés dans des proportions telles que le rapport molaire des unités (I) par rapport à la somme des unités (II) + (III) soit compris entre 0,95 et 1,05 et que la quantité des unités (II) dans le mélange (II) + (III) soit compris entre 30 et 90 % en mole. Autrement dit, cela signifie que les rapports molaires : d'une part : diphénol (ou mélange de diphénols)/dichlorure(s) de diacide(s) + phosgène, et d'autre part : diphénol (ou mélange de diphénols)/diester(s) de diaryle + carbonate de diaryle sont compris entre 0,95 et 1,05. Cela signifie encore que les proportions : d'une part de phosgène et d'autre part de carbonate de diaryle dans les mélanges respectifs : phosgène + dichlorure(s) de diacide(s) et carbonate de diaryle + diester(s) de diaryle, sont compris entre 30 et 90 % en mole.

Quand on fait appel à la réaction d'interéchange et polycondensation, les réactifs de départ peuvent être mis en présence simultanément ou successivement dans un ordre approprié, en présence de tous les catalyseurs connus d'interéchange et de polycondensation, à l'état fondu.

Parmi les catalyseurs utilisables pour la réalisation de la présente invention selon le procédé d'interéchange et polycondensation, on peut citer des composés prévus dans la revue « Encyclopedia of Polymer Science and Technology » (1969 ; volume 10, pages 722 et 723) tels que : lithium, sodium, potassium, magnésium, calcium, titane, manganèse, cobalt, zinc, étain, antimoine, lanthane, cérium, plomb, germanium sous forme par exemple d'oxyde, hydrure, hydroxyde, halogénure, alcoolate, phénolate, sels d'acides organiques ou minéraux, sels complexes, sels mixtes. On utilise plus particulièrement l'acétate de magnésium ou de manganèse. La quantité de catalyseur nécessaire se situe entre 0,005 et 1 mole %, de préférence 0,01 à 0,2 mole % par rapport à la quantité totale des composants carbonate + diester(s).

La réaction d'interéchange et polycondensation débute à une température supérieure à 180 °C, généralement supérieure à 200 °C ; elle peut être effectuée en 1 ou 2 stades ; lorsqu'on effectue la réaction en deux stades, on fait réagir d'abord le carbonate de diaryle sur l'hydroquinone substituée éventuellement en mélange avec l'hydroquinone simple dans les proportions prévues ci-dessus en présence de préférence d'acétate de manganèse. On ajoute ensuite le ou les diester(s) de diaryle. La réaction est effectuée à une température supérieure à 200 °C, de préférence entre 280° et 300 °C, en terminant par une phase sous pression réduite pour faciliter l'augmentation de la masse moléculaire du copolyester par élimination du sous-produit formé.

Dans certains cas, on peut souhaiter augmenter la masse moléculaire du copolyester obtenu par post-condensation à l'état fondu, généralement sous un vide important ou par post-condensation à l'état solide, généralement sous circulation d'un gaz inerte (azote, $CO_2$, argon). Il est également possible d'ajouter des stabilisants vis-à-vis de la chaleur, comme les dérivés du phosphore, à un stade quelconque de la polycondensation ou pendant la mise en forme.

Les exemples qui suivent, dans lesquels les parties s'entendent en poids, sont donnés à titre indicatif mais non limitatif pour illustrer l'invention. Dans ces exemples, sauf mention contraire, les mesures de viscosité inhérente sont effectuées sur une solution à 0,5 g de polymère dans 100 $cm^3$ d'un mélange : parachlorophénol/dichloro-1,2 éthane à 50/50 en volume.

## Exemple 1

Dans un réacteur de polycondensation agité et chauffé muni d'un dispositif de distillation et de balayage par un gaz inerte, on introduit :

| | | |
|---|---|---|
| — téréphtalate de diphényle | 445,2 | parties |
| — carbonate de diphényle (30 % en mole par rapport à l'ensemble téréphtalate + carbonate) | 128,4 | parties |
| — méthyl-hydroquinone | 248 | parties |
| — acétate de magnésium | 0,376 | partie |

Le réacteur est purgé à l'azote puis chauffé par un bain métallique réglé à 250 °C. Lorsque la masse réactionnelle atteint 230 °C, le phénol commence à distiller. Au bout de 3 h 15, on recueille 309,6 parties de phénol (82,3 % de la théorie). On élève la température du bain métallique à 310 °C, la masse réactionnelle passant de 230 à 310 °C ; la pression est alors diminuée en 35 minutes de 760 mm Hg à 2 mm Hg alors que le bain et la masse s'élèvent à 340 °C.

La polycondensation est effectuée en 30 minutes à une température comprise entre 330 et 340 °C sous une pression de 2 mm Hg.

Le polymère est extrait du réacteur. On a recueilli au total 370 parties de phénol (98,4 % de la théorie). Le polymère obtenu est beige et fibrogène ; il possède une viscosité inhérente mesurée de la manière indiquée ci-dessus de 2,15 $dlg^{-1}$ et une température d'écoulement de 275-280 °C.

### Caractéristiques

— Ce polyester est anisotrope jusqu'à plus de 350 °C.
— Température de déflection sous charge (norme ISO — Méthode A) : 97-99 °C.

— Température de transition de second ordre au pendule de torsion : 93 °C.
— Module de torsion en fonction de la température :

| T °C | 25° | 60° | 80° | 90° | 100° | 110° | 120° | 140° | 180° | 220° | 260° | 300° |
|---|---|---|---|---|---|---|---|---|---|---|---|---|
| Module de torsion en daN/mm$^2$ | 110 | 105 | 102 | 95 | 65 | 45 | 38 | 30 | 22 | 14 | 8,5 | 2,8 |

— Analyse thermogravimétrique, effectuée avec une montée en température de 10 °C/minute :

| Perte de poids | | 1 % | 2 % | 5 % |
|---|---|---|---|---|
| Températures | sous air | 381 °C | 405 °C | 443 °C |
| | sous azote | 386 °C | 423 °C | 455 °C |

| | Températures | 500 °C | 600 °C | 700 °C | 800 °C | 900 °C |
|---|---|---|---|---|---|---|
| Perte de poids % | sous air | 23 | 65 | 95,75 | 99 | — |
| | sous azote | 30,25 | 58,75 | 63,5 | 66,5 | 68 |

Les résultats ci-dessus montrent que les polyesters carbonates sont utilisables jusqu'à des températures élevées (400 °C) sans qu'ils présentent une perte de poids notable sous air ou sous azote. Par ailleurs, l'évolution du module de torsion en fonction de la température montre une permanence du niveau de propriétés même au-delà de la température de transition du second ordre.

Le copolyester ainsi obtenu est broyé et séché pendant 48 h à 90 °C sous une pression de 400 mm Hg puis 6 heures à 150 °C sous 1 mm Hg, puis moulé par injection sur presse connue dans le commerce sous la marque « KAP » dans les conditions suivantes :

| | |
|---|---|
| Température : | 350-370 °C |
| Pression : | 8 kg/cm$^2$ |
| Température du moule : | 50 °C |
| Produits moulés : | A barreaux de dimensions 70 × 10 × 4 mm<br>B haltères larges d'épaisseur 2 mm |

Sur les éprouvettes A un traitement thermique sous azote (TT) a été effectué dans les conditions suivantes :

— 20 °C à 240 °C en 30 mn
— 240 °C pendant 30 mn
— 240 °C à 260 °C pendant 30 mn
— 270 °C pendant 30 mn.

Sur les éprouvettes B (haltères d'épaisseur 2 mm), les caractéristiques en traction sont les suivantes :

| | |
|---|---|
| — contrainte de rupture daN/mm$^2$ : | 7,43 |
| — allongement à la rupture % : | 2,48 |
| — module d'élasticité daN/mm$^2$ : | 303 |

Sur les éprouvettes A et B, les caractéristiques de flexion sont les suivantes :

| | | A | B |
|---|---|---|---|
| Viscosité inhérente en dlg$^{-1}$ : | — initiale | 2,29 (*) | 2,15 |
| | — avant TT | 1,73-1,90 (*) | 2,17-2,25 |
| | — après TT | 2,28 | |

(Suite)

| | | A | B |
|---|---|---|---|
| Résistance en flexion en daN/mm$^2$ : | — avant TT<br>— après TT | 12<br>9,5 | 14,3 |
| Module de flexion en daN/mm$^2$ : | — avant TT<br>— après TT | 454<br>367 | 990 |

(*) Viscosité inhérente mesurée sur une solution à 50 °C et 0,5 g/100 cm$^3$ dans le p-chlorophénol seul.

## Exemple 2

Dans un réacteur identique à celui de l'exemple 1 sont introduits :

— carbonate de diphényle (50 % en mole par rapport à l'ensemble : carbonate + téréphtalate) 42,8 parties
— méthyl-hydroquinone 49,6 parties
— acétate de manganèse 0,2 partie

L'appareil est purgé à l'azote puis chauffé avec un bain métallique réglé à 260 °C. Lorsque la masse réactionnelle atteint 253 °C, le phénol commence à distiller ; la température du bain est alors élevée progressivement à 285 °C ce qui correspond à une température de la masse de 274 °C. En 2 h 15 mn on distille 36,85 parties de phénol (98 % de la quantité théorique).

On ajoute alors à la masse fondue 63,6 parties de téréphtalate de diphényle. La température du bain est progressivement élevée à 300 °C ; la pression est ensuite diminuée de 760 à 7 mm Hg en 25 minutes et la polycondensation est effectuée en 1 h 50 à 298 °C sous 7 mm Hg. Dans cette seconde phase 28,65 parties de phénol ont été recueillies (87,1 % de la quantité théorique).

Le copolyester obtenu a une viscosité inhérente de 0,38 dlg$^{-1}$. Une partie de ce copolyester est post condensé en phase liquide à une température comprise entre 275 °C et 286 °C sous une pression de 0,2 mm Hg pendant 2 heures. On obtient une masse fondue anisotrope qui donne par écoulement un polymère fibrogène de viscosité inhérente 0,95 dlg$^{-1}$.

Ce copolyester possède une température d'écoulement d'environ 205 °C et est anisotrope jusqu'à plus de 360 °C.

— Analyse thermogravimétrique :

| | Perte de poids | 1 % | 2 % | 3 % |
|---|---|---|---|---|
| Températures | sous air<br>sous azote | 382 °C<br>419 °C | 406 °C<br>429 °C | 448 °C<br>455 °C |

| | Températures | 500 °C | 600 °C | 700 °C | 800 °C |
|---|---|---|---|---|---|
| Perte de poids % | sous air<br>sous azote | 42,6<br>33,75 | 68,6<br>62 | 93,5<br>67,5 | 99,75<br>68,5 |

## Exemple 3

Dans un réacteur identique à celui de l'exemple 1 sont introduits :

— méthyl-hydroquinone 198,4 parties
— carbonate de phényle (50 % en mole par rapport à l'ensemble : carbonate + téréphtalate) 171,2 parties
— téréphtalate de diphényle 254,4 parties
— acétate de magnésium 0,31 partie
— oxyde d'antimoine 0,31 partie

L'appareil est purgé à l'azote puis chauffé avec un bain métallique réglé à 252 °C. Lorsque la température de la masse réactionnelle atteint 220 °C, la réaction de transestérification débute et le phénol commence à distiller. La température est alors progressivement élevée à 286 °C en 3 heures. A ce moment-là, 70 % du phénol théorique est distillé.

La pression est ensuite diminuée progressivement de 760 à 5 mm Hg en 30 minutes tandis que la température de la masse est amenée de 286 °C à 303 °C. La polycondensation est effectuée en 20 minutes sous 2 mm Hg à une température comprise entre 303 et 307 °C.

On recueille 99 % de la quantité théorique de phénol.

Le copolyester carbonate ainsi obtenu possède une viscosité inhérente de 1,18 $dlg^{-1}$.

Ce polyester est moulé sous presse de marque de commerce « KAP » en atmosphère d'azote dans un moule non chauffé, sous une pression de 7 $kg/cm^2$ à une température de 250 °C, sous forme d'éprouvettes de dimensions 4 × 8,4 × 80 mm, d'haltères de dimensions 2 × 4,4 × 50 mm, et de barreaux entaillés de dimensions 4 × 6 × 50 mm.

Caractéristiques en traction sur haltères :

| | |
|---|---|
| — Contrainte de la rupture $daN/mm^2$ : | 5,5 |
| — Allongement à la rupture % : | 0,63 |
| — Module d'élasticité $daN/mm^2$ : | 918 |

Caractéristiques en flexion :

| | éprouvettes épaisseur 4 mm | haltères |
|---|---|---|
| — Résistance en flexion : $daN/mm^2$ | 8,26 | 15,4 |
| — Module de flexion : | 770 | 988 |

Résistance au choc Charpy (NFT 51 035) sur barreaux entaillés :

— Résilience : 1,59 dJ $cm^{-2}$

Exemples 4 à 7

D'autres essais ont été effectués d'une manière identique à celle décrite dans l'exemple 1, mais avec les proportions suivantes de motifs carbonates par rapport à l'ensemble des motifs téréphtalates + carbonates : 20 %, 35 %, 40 %, 50 %. Les caractéristiques physiques des copolyesters obtenus sont résumées dans le tableau ci-dessous :

| Exemples | Motifs carbonates % en mole | Températures d'écoulement | $\eta$ inh $dlg^{-1}$ |
|---|---|---|---|
| 4 | 20 | > 350 °C | insoluble |
| 5 | 35 | 220 °C | 1,59 |
| 6 | 40 | 210-220 °C | 1,14 |
| 7 | 50 | 205 °C | 0,38 |

L'exemple 4 est cité à titre comparatif pour montrer qu'une proportion de 20 % en motifs carbonates est insuffisante pour obtenir des copolyesters ayant une température d'écoulement inférieure à 330 °C.

Par ailleurs, bien qu'existant potentiellement, l'anisotropie de ce copolymère n'a pas pu être décelée à cause de sa température d'écoulement trop élevée.

Les copolyesters des exemples 5 à 7 sont anisotropes jusqu'à plus de 350 °C.

Exemple 8

Dans un réacteur de polycondensation agité, chauffé et muni d'un dispositif de distillation et de balayage par gaz inerte, on introduit :

| | | |
|---|---|---|
| — méthylhydroquinone | 248 | parties |
| — carbonate de diphényle (80 % en mole par rapport à l'ensemble : carbonate + téréphtalate) | 342,2 | parties |
| — téréphtalate de diphényle | 127,2 | parties |
| — trioxyde d'antimoine | 0,308 | partie |

L'appareil est purgé à l'azote avant de le chauffer au bain métallique réglé à 260 °C. Lorsque la masse atteint 228 °C, le phénol commence à distiller. On en recueille 250,7 parties en 1 h 20 mn (67,8 % de la quantité théorique) tandis que la température de la masse réactionnelle est élevée progressivement à 288 °C. On diminue alors la pression vers 3 mm Hg à 290 °C puis on effectue la polycondensation pendant 40 mn sous vide à 290-300 °C. On recueille un polymère fibrogène de viscosité inhérente de 1,22 $dlg^{-1}$ et de température d'écoulement 238 °C. Ce polymère est broyé et séché pendant 24 heures à 100 °C sous une pression de 400 mn Hg puis 6 heures à 150 °C sous 1 mm Hg. Puis il est moulé par injection sur presse connue dans le commerce sous la marque KAP à 257 °C (pression 8 $kg/cm^2$) le moule étant maintenu vers 250 °C. Les propriétés suivantes sont mesurées :

Propriétés en traction (sur des articles moulés en forme d'haltères d'épaisseur 2 mm) :

— contrainte de rupture : 8,05 $daN/mm^2$
— allongement : 0,52 %
— module d'élasticité : 623 $daN/mm^2$

Propriétés en flexion (sur des barreaux de dimensions 80 × 8,4 × 4 mm) :

— résistance de flexion : 16,3 $daN/mm^2$
— module de flexion : 563 $daN/mm^2$

Résistance au choc Charpy (norme DIN 53 453) sur barreaux entaillés :

— résilience : 12,5 dJ $cm^{-2}$

Exemples 9 à 11

On opère exactement dans les mêmes conditions que celles décrites dans l'exemple 8, mais en modifiant la proportion molaire des carbonates qui est respectivement 70 %, 85 % et 90 % par rapport à l'ensemble : téréphtalate + carbonate. Les caractéristiques des copolyesters sont les suivantes :

| Exemples | Motifs carbonates % | Température d'écoulement | $\eta$ inh $dlg^{-1}$ | Anisotropie |
|---|---|---|---|---|
| 8 | 80 | 238 °C | 1,22 | jusqu'à plus de 350 °C |
| 9 | 70 | 190 °C | 1,10 | jusqu'à plus de 350 °C |
| 10 | 85 | 250 °C | 0,68 | jusqu'à 280 °C |
| 11 | 90 | 260 °C | 0,77 | jusqu'à 268 °C |

Exemple 12

On prépare de la manière indiquée dans l'exemple 3 un copolyester de même composition mais possédant une viscosité inhérente de 2,28 $dlg^{-1}$.

Le polymère a été filé à l'état fondu à 340 °C à travers une filière comportant 6 orifices de diamètre 0,23 mm, ladite filière étant maintenue à une température de 345 °C.

Le fil obtenu possède immédiatement, après filage, les caractéristiques suivantes :

— titre global : 65 dtex/6 brins
— ténacité : 9,4 g/tex
— allongement : 0,47 %
— module de Young : 1 292 g/tex
— viscosité inhérente sur fil : 1,81 $dlg^{-1}$

Exemple 13

On prépare un copolyester de composition identique à celui de l'exemple 2 mais de viscosité inhérente 2 $dlg^{-1}$ et on le file à l'état fondu à température de 320 °C, à travers une filière de 6 orifices de diamètre 0,23 mm maintenue à 305 °C. Les filaments obtenus ont les propriétés suivantes :

— titre global : 84 dtex/6 brins
— ténacité : 18,1 g/tex

— allongement : 1,06 %
— module de Young : 1 699 g/tex
— viscosité inhérente sur fil : 1,55 $dlg^{-1}$

Exemple 14

A titre comparatif par rapport à l'exemple 2, on remplace la méthyl-hydroquinone par l'hydroquinone simple en proportion équivalente. La proportion en motifs carbonates étant de 50 % en mole par rapport à l'ensemble des motifs carbonates + téréphtalates.

Dans un tube de polycondensation de 150 $cm^3$, on introduit :

— carbonate de diphényle : 10,7 parties
— hydroquinone : 11 parties
— acétate de manganèse : 0,1 partie

L'appareil est purgé à l'azote et on chauffe le tube avec un bain métallique réglé à 260 °C ; lorsque la masse atteint environ 240 °C, la distillation du phénol commence ; en 20 minutes on distille 7,5 parties de phénol tandis que la masse est montée à 262 °C.

On introduit alors 15,9 parties de téréphtalate de diphényle. La distillation du phénol reprend lorsque la masse atteint 273 °C. On distille en 2 h 55 à nouveau 8,5 parties de phénol, tandis que la masse a été amenée à 380 °C ; mais au bout de 2 h 30 à partir de 280 °C, la masse est solidifiée. On abaisse la pression de 760 à 0,5 mm Hg en 10 minutes et on termine en post condensant à 320-330 °C sous 0,5 mm Hg en phase solide durant 2 h 10.

On obtient un polymère insoluble dans le solvant utilisé ci-dessus, de point de fusion supérieur à 350 °C, ne convenant pas dans le cadre de l'invention ; il est impossible de le mettre en forme dans une gamme de température habituellement utilisée pour la mise en forme.

Exemple 15

A titre comparatif par rapport à l'exemple 8, on remplace la méthyl-hydroquinone par l'hydroquinone simple en proportion équivalente. La proportion en motifs carbonates est de 80 % en mole par rapport à l'ensemble : carbonate + téréphtalate.

Dans un réacteur de polycondensation agité et chauffé, muni d'un dispositif d'agitation et de balayage par un gaz inerte, on introduit :

— carbonate de diphényle : 220,2 parties
— hydroquinone : 342,7 parties
— téréphtalate de diphényle : 127,3 parties
— acétate de magnésium : 0,345 partie

L'appareil est purgé à l'azote et on chauffe le tube avec un bain métallique réglé à 240 °C ; lorsque la masse atteint environ 216 °C, la distillation du phénol commence ; la température de la masse est progressivement montée à 270 °C en 4 heures, la masse est alors devenue solide et friable.

On élève la température à 340-350 °C en deux heures, sans que l'on puisse refondre la masse. On abaisse alors la pression de 760 à 0,8 mm Hg et on polycondense cette masse solide à 340-350 °C pendant 1 h 15 mn. La poudre beige obtenue est insoluble dans le mélange solvant utilisé. La température d'écoulement est supérieure à 350 °C.

Au test TOT, on détecte une température d'écoulement comprise entre 370 et 390 °C, la masse étant anisotrope jusqu'à plus de 430 °C.

Exemple 16

Dans un réacteur de polycondensation agité et chauffé, muni d'un dispositif d'agitation et de balayage par un gaz inerte, on introduit :

— carbonate de diphényle (50 % en mole par rapport à l'ensemble : carbonate + téréphtalate) : 42,8 parties
— méthyl-hydroquinone (50 % en mole par rapport à l'ensemble des diphénols) : 24,8 parties
— hydroquinone (50 % en mole) : 22 parties
— acétate de manganèse : 0,2 partie

On opère de la manière décrite dans l'exemple 2, en deux stades avec addition en début du 2e stade de 63,6 parties de téréphtalate de diphényle et en terminant sous pression réduite de la manière indiquée dans l'exemple 2.

Le copolyester ainsi obtenu possède les caractéristiques suivantes :

— température d'écoulement : 280 °C
— viscosité inhérente : 1,43 $dlg^{-1}$
— anisotropie jusqu'à plus de : 360 °C

Exemple 17

On reproduit l'exemple 16 avec les réactifs suivants :

— carbonate de diphényle (50 % en mole par rapport à l'ensemble : carbonate + téréphtalate) : 42,8 parties
— méthyl-hydroquinone (60 % en mole par rapport à l'ensemble des diphénols) : 29,76 parties
— hydroquinone (40 % en mole par rapport à l'ensemble des diphénols) : 17,6 parties
— acétate de manganèse : 0,2 partie

On opère en deux stades de la manière indiquée dans l'exemple 2 en ajoutant au début du second stade 63,6 parties de téréphtalate de diphényle et en terminant également la polycondensation sous pression réduite.

Le copolyester ainsi obtenu possède les caractéristiques suivantes :

— température d'écoulement : 265 °C
— viscosité inhérente : insoluble
— anisotropie jusqu'à plus de : 360 °C

Exemple 18

On reproduit l'exemple 16 avec les réactifs suivants :

— carbonate de diphényle (50 % en mole par rapport à l'ensemble : carbonate + téréphtalate) : 42,8 parties
— méthyl-hydroquinone (70 % en mole par rapport à l'ensemble des diphénols) : 34,72 parties
— hydroquinone (30 % en mole par rapport à l'ensemble des diphénols) : 13,2 parties
— acétate de manganèse : 0,2 partie

On opère en deux stades en ajoutant au second stade 63,6 parties de téréphtalate de diphényle et en terminant l'opération sous vide.

Le copolyester obtenu possède les caractéristiques suivantes :

— température d'écoulement : 237 °C
— viscosité inhérente : 1,18 $dlg^{-1}$
— anisotropie jusqu'à plus de : 350 °C

Le tableau ci-dessous résume les caractéristiques des copolyesters dans lesquels la proportion d'hydroquinone simple par rapport à l'ensemble des diphénols varie de 0 à 100 moles % (l'autre diphénol étant la méthyl-hydroquinone) et la proportion en carbonate de diphényle par rapport à l'ensemble : carbonate + téréphtalate est fixée à 50 % en mole.

| Exemples | Hydroquinone simple % en mole | Température d'écoulement | $\eta$ inh $dlg^{-1}$ | Anisotropie |
|---|---|---|---|---|
| 2 | 0 | 205 °C | 0,95 | jusqu'à plus de 360 °C |
| 18 | 30 | 237 °C | 1,18 | jusqu'à plus de 350 °C |
| 17 | 40 | 265 °C | insoluble | jusqu'à plus de 360 °C |
| 16 | 50 | 280 °C | 1,43 | jusqu'à plus de 360 °C |
| 14 | 100 | > 360 °C | insoluble | non déterminée |

**Revendications** (pour les Etats contractants : BE, CH, DE, FR, GB, IT, NL, SE)

1. Polyesters carbonates thermotropes conformables de masse moléculaire élevée, caractérisés par le fait qu'ils possèdent une viscosité inhérente supérieure à 0,3 $dlg^{-1}$ (mesurée sur une solution à 0,5 g de polymère dans 100 $cm^3$ d'un mélange parachlorophénol/dichloro-1,2 éthane à 50/50 en volume), une

température d'écoulement supérieure ou égale à 150 °C est inférieure à 330 °C et qu'ils sont constitués d'unités de formule :

(I) $-(-O-R-O-)-_a, -(-O-R_1-O-)-_b$

(II) $-\overset{O}{\overset{\|}{C}}-$

(III) $-CO-R_2-CO-$

dans lesquelles :

— les radicaux R, identiques, représentent chacun un radical paraphénylène monosubstitué par un groupe méthyle, éthyle, ou un atome de chlore ou de brome ;

— les radicaux $R_1$ représentent chacun un radical paraphénylène non substitué ;

— avec $0{,}3 \leq a \leq 1$ ; $0 \leq b \leq 0{,}7$ ; et $a + b = 1$ ;

— les radicaux $R_2$, qui peuvent être identiques ou différents, représentent chacun un radical choisi parmi les groupes paraphénylène, cyclohexylène-1,4, biphénylène-4,4', naphtylène-2,6, éthylènedioxy-4,4' diphénylène-1,1', butylènedioxy-4,4' diphénylène-1,1', hexylènedioxy-4,4' diphénylène-1,1' ; la quantité des unités (II) dans le mélange (II) et (III) étant comprise entre 30 et 90 % en mole ; et le rapport molaire des unités (I) par rapport à la somme des unités (II) + (III) étant compris entre 0,95 et 1,05.

2. Polyesters carbonates selon la revendication 1, caractérisés par le fait que les symboles a et b répondent aux relations : $0{,}5 \leq a \leq 1$ ; $0 \leq b \leq 0{,}5$ ; pour $a + b = 1$.

3. Polyesters carbonates selon l'une quelconque des revendications 1 à 2, caractérisés par le fait qu'ils possèdent une viscosité inhérente supérieure à 0,5 $dlg^{-1}$.

4. Polyesters carbonates selon l'une quelconque des revendications 1 à 3, caractérisés par le fait qu'ils possèdent une température d'écoulement comprise entre 190 °C et 280 °C.

5. Polyesters carbonates selon l'une quelconque des revendications 1 à 4, caractérisés en ce que le radical R est un radical paraphénylène monosubstitué par un groupe méthyle.

6. Polyesters carbonates selon l'une quelconque des revendications 1 à 5, caractérisés en ce que le radical $R_2$ est le radical paraphénylène.

7. Articles conformés tels que fils, films et objets moulés issus des polyesters carbonates selon l'une quelconque des revendications 1 à 6.

8. Procédé pour l'obtention des polyesters carbonates selon l'une quelconque des revendications 1 à 6, caractérisé par le fait que l'on fait réagir :

α) un dichlorure d'acide téréphtalique, cyclohexanedicarboxylique-1,4, biphényldicarboxylique-4,4', naphtalènedicarboxylique-2,6, éthylènedioxy-4,4' dibenzènedicarboxylique-1,1', butylènedioxy-4,4' dibenzènedicarboxylique-1,1', ou hexylènedioxy-4,4' dibenzènedicarboxylique-1,1', ou un mélange de deux ou de plus de deux des dichlorures précités entre eux ;

β) avec du phosgène ;

γ) et avec la méthyl-, l'éthyl-, la chloro-, ou la bromohydroquinone, seule ou en mélange avec jusqu'à 70 % en mole (par rapport à l'ensemble des diphénols) d'hydroquinone simple ; le rapport molaire : diphénol (ou mélange de diphénols) sur l'ensemble dichlorure(s) d'acide(s) + phosgène étant compris entre 0,95 et 1,05 ; la quantité de phosgène dans le mélange phosgène + dichlorure(s) de diacide(s) étant comprise entre 30 et 90 % en mole ; la réaction pouvant être effectuée en solution ou par polycondensation interfaciale.

9. Procédé pour l'obtention des polyesters carbonates selon l'une quelconque des revendications 1 à 6, caractérisé par le fait que l'on fait réagir à une température supérieure à 200 °C :

α) un diester de diaryle d'acide téréphtalique, cychlohexanedicarboxylique-1,4, biphényldicarboxylique-4,4', naphtalènedicarboxylique-2,6, éthylènedioxy-4,4' dibenzènedicarboxylique-1,1', butylènedioxy-4,4', dibenzènedicarboxylique-1,1, ou hexylènedioxy-4,4' dibenzènedicarboxylique-1,1', ou un mélange de deux ou de plus de deux des diesters précités entre eux ;

β) avec un carbonate de diaryle ;

γ) et avec la méthyl-, éthyl-, chloro- ou bromohydroquinone, seule ou en mélange avec jusqu'à 70 % en mole (par rapport à l'ensemble des diphénols) d'hydroquinone simple ; le rapport molaire : diphénol (ou mélange de diphénols) sur l'ensemble diester(s) de diaryle + carbonate de diaryle étant compris entre 0,95 et 1,05 ; la quantité de carbonate de diaryle dans le mélange carbonate de diaryle + diester(s) de diaryle étant comprise entre 30 et 90 % en mole.

10. Procédé selon la revendication 9, caractérisé par le fait que la réaction d'interéchange est effectuée en deux stades, comprenant d'abord la réaction de carbonate de diaryle sur l'hydroquinone substituée, éventuellement en mélange avec l'hydroquinone simple, puis l'addition de diester(s) de diaryle à une température supérieure à 200 °C, puis polycondensation du produit obtenu à l'état fondu sous pression réduite.

**Revendications** (pour l'Etat contractant AT)

1. Procédé pour l'obtention des polyesters carbonates thermotropes conformables de masse moléculaire élevée, caractérisé par le fait que l'on fait réagir :

α) un dichlorure d'acide téréphtalique, cyclohexanedicarboxylique-1,4, biphényldicarboxylique-4,4', naphtalènedicarboxylique-2,6, éthylènedioxy-4,4' dibenzènedicarboxylique-1,1', butylènedioxy-4,4', dibenzènedicarboxylique-1,1', ou hexylènedioxy-4,4' dibenzènedicarboxylique-1,1', ou un mélange de deux ou de plus de deux des dichlorures précités entre eux ;

β) avec du phosgène ;

γ) et avec la méthyl-, éthyl-, la chloro-, ou la bromohydroquinone, seule ou en mélange avec jusqu'à 70 % en mole (par rapport à l'ensemble des diphénols) d'hydroquinone simple ; le rapport molaire : diphénol (ou mélange des diphénols) sur l'ensemble dichlorure(s) d'acide(s) + phosgène étant compris entre 0,95 et 1,05 ; la quantité de phosgène dans le mélange phosgène + dichlorure(s) de diacide(s) étant comprise entre 30 et 90 % en mole ; la réaction pouvant être effectuée en solution ou par polycondensation interfaciale.

2. Procédé pour l'obtention des polyesters carbonates thermotropes conformables de masse moléculaire élevée, caractérisé par le fait que l'on fait réagir à une température supérieure à 200 °C :

α) un diester de diaryle d'acide téréphtalique, cyclohexanedicarboxylique-1,4, biphényldicarboxylique-4,4', naphtalènedicarboxylique-2,6, éthylènedioxy-4,4' dibenzènedicarboxylique-1,1', butylènedioxy-4,4' dibenzènedicarboxylique-1,1', ou hexylènedioxy-4,4' dibenzènedicarboxylique-1,1', ou un mélange de deux ou de plus de deux des diesters précités entre eux ;

β) avec un carbonate de diaryle ;

γ) et avec la méthyl-, éthyl-, chloro- ou bromohydroquinone, seule ou en mélange avec jusqu'à 70 % en mole (par rapport à l'ensemble des diphénols) d'hydroquinone simple ; le rapport molaire : diphénol (ou mélange de diphénols) sur l'ensemble diester(s) de diaryle + carbonate de diaryle étant compris entre 0,95 et 1,05 ; la quantité de carbonate de diaryle dans le mélange carbonate de diaryle + diester(s) de diaryle étant comprise entre 30 et 90 % en mole.

3. Procédé selon la revendication 2, caractérisé par le fait que le (ou les) diester(s) de diaryle (α) sont des diesters de diphényle, de ditolyle, de phényle et tolyle ou de dinaphtyle.

4. Procédé selon la revendication 2, caractérisé par le fait que le carbonate de diaryle (β) est un carbonate de diphényle, de ditolyle, de phényle et tolyle ou de dinaphtyle.

5. Procédé selon l'une quelconque des revendications 2 à 4, caractérisé par le fait que la réaction d'interéchange est effectuée en deux stades, comprenant d'abord la réaction de carbonate de diaryle sur l'hydroquinone substituée, éventuellement en mélange avec l'hydroquinone simple, puis l'addition de diester(s) de diaryle à une température supérieure à 200 °C, puis polycondensation du produit obtenu à l'état fondu sous pression réduite.

**Claims** (for the Contracting States : BE, CH, DE, FR, GB, IT, NL, SE)

1. Thermotropic carbonate polyesters of high molecular weight, which can be shaped, characterised in that they possess an inherent viscosity of more than 0.3 $dlg^{-1}$ (measured on a solution containing 0.5 g of polymer in 100 $cm^3$ of a 50/50 by volume mixture of para-chlorophenol and 1,2-dichloroethane) and a flow point which is above or equal to 150 °C and below 330 °C, and in that they consist of units of the formulae :

(I) $-(-O-R-O-)-_a,\ -(-O-R_1-O-)-_b$

(II) $-\overset{\overset{\displaystyle O}{\|}}{C}-$ and

(III) $-CO-R_2-CO-$

in which

— the radicals R, which are identical, each represent a para-phenylene radical which is monosubstituted by a methyl or ethyl group or a chlorine or bromine atom and

— the radicals $R_1$ each represent an unsubstituted paraphenylene radical,

— with $0.3 \leq a \leq 1$, $0 \leq b \leq 0.7$ and $a + b = 1$, and

— the radicals $R_2$, which can be identical or different, each represent a radical chosen from amongst para-phenylene, 1,4-cyclohexylene, 4,4'-biphenylene, 2,6-naphthylene, 1,1'-(4,4'-ethylenedioxydiphenylene), 1,1'-(4,4'-butylenedioxydiphenylene) and 1,1'-(4,4'-hexylene-dioxydiphenylene) groups, the amount of the units (II) in the mixture (II) + (III) being between 30 and 90 mol % and the molar ratio of the units (I) to the sum of the units (II) + (III) being between 0.95 and 1.05.

2. Carbonate polyesters according to Claim 1, characterised in that the symbols a and b satisfy the equations : $0.5 \leq a \leq 1$ and $0 \leq b \leq 0.5$, in which $a + b = 1$.

3. Carbonate polyesters according to either one of Claims 1 and 2, characterised in that they possess an inherent viscosity of more than 0.5 $dlg^{-1}$.

4. Carbonate polyesters according to any one of Claims 1 to 3, characterised in that they possess a flow point of between 190 °C and 280 °C.

5. Carbonate polyesters according to any one of Claims 1 to 4, characterised in that the radical R is a para-phenylene radical which is monosubstituted by a methyl group.

6. Carbonate polyesters according to any one of Claims 1 to 5, characterised in that the radical $R_2$ is the para-phenylene radical.

7. Shaped articles, such as filaments, films and moulded articles, produced from the carbonate polyesters according to any one of Claims 1 to 6.

8. Process for the preparation of the carbonate polyesters according to any one of Claims 1 to 6, characterised in that:

α) the dichloride of terephthalic acid, cyclohexane-1,4-dicarboxylic acid, biphenyl-4,4'-dicarboxylic acid, naphthalene-2,6-dicarboxylic acid, 4,4'-ethylene-dioxydibenzene-1,1'-dicarboxylic acid, 4,4'-butylenedioxydibenzene-1,1'-dicarboxylic acid or 4,4'-hexylenedioxydibenzene-1,1'-dicarboxylic acid, or a mixture of two or more than two of the abovementioned dichlorides with one another, is reacted with

β) phosgene, and with

γ) methyl-, ethyl-, chloro- or bromo-hydroquinone, by itself or mixed with up to 70 mol % (relative to the sum of the diphenols) of unsubstituted hydroquinone, the molar ratio of diphenol (or mixture of diphenols) to the sum of acid dichloride(s) + phosgene being between 0.95 and 1.05, the amount of phosgene in the mixture of phosgene + diacid dichloride(s) being between 30 and 90 mol % and it being possible for the reaction to be carried out in solution or by means of interfacial polycondensation.

9. Process for the preparation of the carbonate polyesters according to any one of Claims 1 to 6, characterised in that:

α) a diaryl diester of terephthalic acid, cyclohexane-1,4-dicarboxylic acid, biphenyl-4,4'-dicarboxylic acid, naphthalene-2,6-dicarboxylic acid, 4,4'-ethylenedioxydibenzene-1,1'-dicarboxylic acid, 4,4'-butylenedioxydibenzene-1,1'-dicarboxylic acid or 4,4'-hexylenedioxydibenzene-1,1'-dicarboxylic acid, or a mixture of two or more than two of the abovementioned diesters with one another, is reacted, at a temperature above 200 °C, with

β) a diaryl dicarbonate, and with

γ) methyl-, ethyl-, chloro- or bromo-hydroquinone, by itself or mixed with up to 70 mol % (relative to the sum of the diphenols) of unsubstituted hydroquinone, the molar ratio of diphenol (or mixture of diphenols) to the sum of diaryl diester(s) + diaryl carbonate being between 0.95 and 1.05 and the amount of diaryl carbonate in the mixture of diaryl carbonate + diaryl diester(s) being between 30 and 90 mol %.

10. Process according to Claim 9, characterised in that the exchange reaction is carried out in two stages which comprise firstly the reaction of the diaryl carbonate with the substituted hydroquinone, which is optionally mixed with unsubstituted hydroquinone, then the addition of the diaryl diester(s) at a temperature above 200 °C, and then the polycondensation of the resulting product, in the molten state, under reduced pressure.

**Claims** (for the Contracting State AT)

1. Process for the preparation of thermotropic carbonate polyesters of high molecular weight, which can be shaped, characterised in that:

α) the dichloride of terephthalic acid, cyclohexane-1,4-dicarboxylic acid, biphenyl-4,4'-dicarboxylic acid, naphthalene-2,6-dicarboxylic acid, 4,4'-ethylenedioxydibenzene-1,1'-dicarboxylic acid, 4,4'-butylenedioxydibenzene-1,1'-dicarboxylic acid or 4,4'-hexylenedioxydibenzene-1,1'-dicarboxylic acid, or a mixture of two or more than two of the abovementioned dichlorides with one another, is reacted with

β) phosgene, and with

γ) methyl-, ethyl-, chloro- or bromo-hydroquinone, by itself or mixed with up to 70 mol % (relative to the sum of the diphenols) of unsubstituted hydroquinone, the molar ratio of diphenol (or mixture of diphenols) to the sum of dichloride(s) + phosgene being between 0.95 and 1.05, the amount of phosgene in the mixture of phosgene + diacide dichloride(s) being between 30 and 90 mol % and it being possible for the reaction to be carried out in solution or by means of interfacial polycondensation.

2. Process for the preparation of thermotropic carbonate polyesters of high molecular weight, which can be shaped, characterised in that:

α) a diaryl diester of terephthalic acid, cyclo hexane-1,4-dicarboxylic acid, biphenyl-4,4'-dicarboxylic acid, naphtalene-2,6-dicarboxylic acid, 4,4'-ethylenedioxydibenzene-1,1'-dicarboxylic acid, 4,4'-butylenedioxydibenzene-1,1'-dicarboxylic acid or 4,4'-hexylenedioxydibenzene-1,1'-dicarboxylic acid, or a mixture of two or more than two of the abovementioned diesters with one another, is reacted, at a temperature above 200 °C, with

β) a diaryl carbonate, and with

γ) methyl-, ethyl-, chloro- or bromo-hydroquinone, by itself or mixed with up to 70 mol % (relative to the sum of the diphenols) of unsubstituted hydroquinone, the molar ratio of diphenol (or mixture of diphenols) to the sum of diaryl diester(s) + diaryl carbonate being between 0.95 and 1.05 and the amount

of diaryl carbonate in the mixture of diaryl carbonate + diaryl diesters(s) being between 30 and 90 mol %.

3. Process according to claim 2, characterised in that the diaryl diester (α) is a diphenyl diester, a ditolyl diester, a phenyl tolyl diester or a dinaphthyl diester.

4. Process according to claim 2, characterised in that the diaryl carbonate (β) is a diphenyl carbonate, a ditolyl carbonate, a phenyl tolyl carbonate or a dinaphthyl carbonate.

5. Process according to any one of claims 2 to 4, characterised in that the exchange reaction is carried out in two stages which comprise firstly the reaction of the diaryl carbonate with the substituted hydroquinone, which is optionnally mixed with unsubstituted hydroquinone, then the addition of the diaryl diester(s) at a temperature above 200 °C, and then the polycondensation of the resulting product, in the molten state, under reduced pressure.

**Ansprüche** (für die Vertragsstaaten : BE, CH, DE, FR, GB, IT, NL, SE)

1. Verformbare thermotrope Polyestercarbonate mit hoher Molekularmasse, dadurch gekennzeichnet, daß sie eine Eigenviskosität höher als 0,3 $dlg^{-1}$ (gemessen an einer Lösung von 0,5 g Polymerem in 100 $cm^3$ eines Gemisches Parachlorphenol/1,2-Dichloräthan zu 50/50 in Volumen) haben, eine Fließtemperatur höher oder gleich 150 °C und unterhalb von 330 °C, und daß sie gebildet sind aus Einheiten der Formel

(I) $-(-O-R-O-)_a-, -(-O-R_1-O-)-_b$

(II) 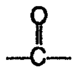

(III) $-CO-R_2-CO-$

worin bedeuten :

— die Reste R, die identisch sind, bedeuten jeweils einen Paraphenylenrest, der durch eine Methyl- oder Äthylgruppe oder ein Chlor- oder Bromatom monosubstituiert ist ;

— die Reste $R_1$ bedeuten jeweils einen nicht substituierten Paraphenylenrest ;

— mit $0{,}3 \leqslant a \leqslant 1$ ; $0 \leqslant b \leqslant 0{,}7$ ; und $a + b = 1$ ;

— die Reste $R_2$, welche identisch oder voneinander verschieden sein können, bedeuten jeweils einen Rest, ausgewählt unter den Gruppen Paraphenylen, 1,4-Cyclohexylen, 4,4'-Biphenylen, 2,6-Naphthylen, 4,4'-Äthylendioxy-1,1'-diphenylen, 4,4'-Butylendioxy-1,1'-diphenylen, 4,4'-Hexylendioxy-1,1'-diphenylen ; wobei die Menge der Einheiten (II) in dem Gemisch (II) und (III) zwischen 30 und 90 Mol-% liegt ; und das Molverhältnis der Einheiten (I) in bezug auf die Summe der Einheiten (II) + (III) zwischen 0,95 und 1,05 liegt.

2. Polyestercarbonate gemäß Anspruch 1, dadurch gekennzeichnet, daß die Symbole a und b den Relationen : $0{,}5 \leqslant a \leqslant 1$ ; $0 \leqslant b \leqslant 0{,}5$ ; für $a + b = 1$ entsprechen.

3. Polyestercarbonate gemäß einem der Ansprüche 1 bis 2, dadurch gekennzeichnet, daß sie eine Eigenviskosität oberhalb von 0,5 $dlg^{-1}$ besitzen.

4. Polyestercarbonate gemäß einem der Ansprüche 1 bis 3, dadurch gekennzeichnet, daß sie eine Fließtemperatur zwischen 190 und 280 °C besitzen.

5. Polyestercarbonate gemäß einem der Ansprüche 1 bis 4, dadurch gekennzeichnet, daß der Rest R ein Paraphenylenrest ist, der durch eine Methylgruppe monosubstituiert ist.

6. Polyestercarbonate gemäß einem der Ansprüche 1 bis 5, dadurch gekennzeichnet, daß der Rest $R_2$ der Paraphenylenrest ist.

7. Geformte Erzeugnisse, wie Fäden, Filme und geformte Gegenstände, aus Polyestercarbonaten gemäß einem der Ansprüche 1 bis 6.

8. Verfahren zur Erzielung der Polyestercarbonate nach einem der Ansprüche 1 bis 6, dadurch gekennzeichnet, daß man umsetzt :

α) ein Dichlorid von Terephthalsäure, Cyclohexan-1,4-dicarbonsäure, Biphenyl-4,4'-dicarbonsäure, Naphthalin-2,6-dicarbonsäure, 4,4-Äthylendioxy-dibenzol-1,1'-dicarbonsäure, 4,4'-Butylendioxy-dibenzol-1,1'-dicarbonsäure oder 4,4'-Hexylendioxy-dibenzol-1,1'-dicarbonsäure oder ein Gemisch von zwei oder mehr als zwei der erwähnten Dichloride untereinander ;

β) mit Phosgen ;

γ) und mit Methyl-, Äthyl-, Chlor- oder Bromhydrochinon allein oder im Gemisch mit bis zu 70 Mol-% (in bezug auf die Gesamtheit der Diphenole) einfachem Hydrochinon ; wobei das Molverhältnis : Diphenol (oder das Gemisch der Diphenole) zu der Gesamtheit des (der) Säurechlorids(e) + Phosgen zwischen 0,95 und 1,05 liegt ; die Menge an Phosgen in dem Gemisch Phosgen + Dichlorid(e) der Disäure(n) zwischen 30 und 90 Mol-% liegt ; und wobei die Reaktion in Lösung oder durch Grenzflächenpolykondensation bewirkt wird.

9. Verfahren zur Erzielung der Polyestercarbonate gemäß einem der Ansprüche 1 bis 6, dadurch gekennzeichnet, daß man bei einer Temperatur oberhalb von 200 °C umsetzt :

α) einen Diaryldiester von Terephthalsäure, Cyclohexan-1,4-dicarbonsäure, Biphenyl-4,4'-dicarbonsäure, Naphthalin-2,6-dicarbonsäure, 4,4'-Äthylendioxy-dibenzol-1,1'-dicarbonsäure, 4,4'-Butylendioxy-dibenzol-1,1'-dicarbonsäure oder 4,4'-Hexylendioxy-dibenzol-1,1'-dicarbonsäure oder ein Gemisch von zwei oder mehr als zwei der erwähnten Diester untereinander ;

β) mit einem Diarylcarbonat ;

γ) und mit Methyl-, Äthyl-, Chlor- oder Bromhydrochinon allein oder im Gemisch mit bis zu 70 Mol-% (in bezug auf die Gesamtheit der Diphenole) an einfachem Hydrochinon ; wobei das Molverhältnis Diphenol (oder das Gemisch der Diphenole) zur Gesamtheit des (der) Diaryldiester + Diarylcarbonat zwischen 0,95 und 1,05 liegt ; die Menge an Diarylcarbonat in dem Gemisch Diarylcarbonat + Diaryldiester zwischen 30 und 90 Mol-% liegt.

10. Verfahren gemäß Anspruch 9, dadurch gekennzeichnet, daß die Austauschreaktion in zwei Stufen bewirkt wird, wobei zunächst die Reaktion von Diarylcarbonat mit dem substituierten Hydrochinon, gegebenenfalls in Mischung mit einfachem Hydrochinon, bewirkt wird und dann der Zusatz des oder des Diarylester bei einer Temperatur oberhalb 200 °C und dann die Polykondensation des erhaltenen Produkts in geschmolzenem Zustand unter vermindertem Druck erfolgen.

**Ansprüche** (für den Vertragsstaat AT)

1. Verfahren zur Herstellung von verformbaren, thermotropen Carbonatpolyestern mit erhöhter Molekularmasse, dadurch gekennzeichnet, daß man reagieren läßt :

α) ein Terephthalsäure-, 1,4-Cyclohexandicarbonsäure-, 4,4'-Biphenyldicarbonsäure-, 2,6-Naphthalin-dicarbonsäure-4,4'-Äthylendioxy-1,1'-dibenzoldicarbonsäure-, 4,4'-Butylendioxy-1,1'-dibenzoldicarbonsäure- oder 4,4'-Hexylendioxy-1,1'-dibenzoldicarbonsäuredichlorid oder eine Mischung von zwei oder mehreren der genannten Dichloride miteinander ;

β) mit Phosgen ;

γ) und mit Methyl-, Äthyl-, Chlor- oder Bromhydrochinon allein oder in Mischung mit bis zu 70 Mol % (bezogen auf die gesamten Diphenole) einfachem Hydrochinon ; wobei das molare Verhältnis : Diphenol (oder Diphenolmischung) zur Gesamtheit des (der) Säuredichlorids (-chloride) + Phosgen 0,95 bis 1,05 beträgt ; die Menge des Phosgens in der Mischung von Phosgen + Disäuredichlorid(en) zwischen 30 und 90 Mol % liegt und die Reaktion in Lösung oder durch Grenzflächenpolykondensation durchgeführt werden kann.

2. Verfahren zur Herstellung von verformbaren, thermotropen Carbonatpolyestern mit erhöhter Molekularmasse, dadurch gekennzeichnet, daß man bei einer Temperatur über 200 °C reagieren läßt :

α) einen Terephthalsäure-, 1-4-Cyclohexandicarbonsäure-4,4'-Biphenyldicarbonsäure-, 2,6 Naphthalindicarbonsäure-, 4,4'-Äthylendioxy-1,1'-dibenzoldicarbonsäure-, 4,4'-Butylendioxy-1,1'-dibenzoldicarbonsäure- oder 4,4'-Hexylendioxy-1,1'-dibenzoldicarbonsäurediaryldiester oder eine Mischung von zwei oder mehreren der genannten Diester miteinander ;

β) mit einem Diarylcarbonat ;

γ) und mit Methyl-, Äthyl-, Chlor- oder Bromhydrochinon allein oder in Mischung mit bis zu 70 Mol % (bezogen auf die gesamten Diphenole) einfachem Hydrochinon, wobei das molare Verhältnis : Diphenol (oder Diphenolmischung) zur Gesamtheit von Diaryldiester(n) + Diarylcarbonat zwischen 0,95 und 1,05 liegt ; und die Menge des Diarylcarbonats in der Mischung von Diarylcarbonat + Diaryldiester(n) 30 bis 90 Mol % beträgt.

3. Verfahren nach Anspruch 2, dadurch gekennzeichnet, daß der (oder die) Diaryldiester (α) Diphenyl-, Ditolyl-, Phenyl- und Tolyl- oder Dinaphthyldiester sind.

4. Verfahren nach Anspruch 2, dadurch gekennzeichnet, daß das Diarylcarbonat (β) ein Diphenyl-, Ditolyl-, Phenyl- und Tolyl- oder Dinaphthylcarbonat ist.

5. Verfahren nach einem der Ansprüche 2 bis 4, dadurch gekennzeichnet, daß die Austauschreaktion in zwei Stufen ausgeführt wird, die zuerst die Reaktion des Diarylcarbonats mit dem substituierten Hydrochinon, gegebenenfalls in Mischung mit dem einfachen Hydrochinon, und dann den Zusatz des (der) Diaryldiester(s) bei einer Temperatur über 200 °C umfassen, worauf das erhaltene Produkt im geschmolzenen Zustand unter vermindertem Druck polykondensiert wird.